# EUROPÄISCHE PATENTSCHRIFT

(11) **EP 1 863 681 B1**
(45) Veröffentlichungstag und Bekanntmachung des Hinweises auf die Patenterteilung: **03.10.2012**
(21) Anmeldenummer: 06707839.4
(22) Anmeldetag: 25.01.2006
(51) Int. Cl.: B60R 21/01

(54) **VORRICHTUNG ZUR ANSTEUERUNG UND DIAGNOSE VON REVERSIBLEN SCHUTZSYSTEMEN**
DEVICE FOR CONTROLLING AND DIAGNOSTICATE A REVERSIBLE PROTECTION SYSTEM
DISPOSITIF DE COMMANDE ET DIAGNOSTIC DE SYSTEMES DE PROTECTION REVERSIBLES

(30) Priorität: 21.03.2005 DE 102005012944
(43) Veröffentlichungstag der Anmeldung: 12.12.2007
(73) Patentinhaber: ROBERT BOSCH GMBH, 70442 Stuttgart (DE)
(72) Erfinder: NITSCHKE, Werner, 71679 Asperg (DE); NITZSCHE, Thomas, 74321 Bietigheim (DE); JOUSSE, Alain, 70192 Stuttgart (DE); SANCHIS ANTON, Maria-Jesus, 70563 Stuttgart (DE)
(86) Internationale Anmeldenummer: PCT/EP2006/050440
(87) Internationale Veröffentlichungsnummer: WO 2006/100137

(56) Entgegenhaltungen:
- EP-A- 1 382 495

## Beschreibung

### STAND DER TECHNIK

Die vorliegende Erfindung betrifft eine Vorrichtung zur Ansteuerung und Diagnose von reversiblen Schutzsystemen.

In der Fahrzeugtechnik werden vielfältige Systeme zum Schutz der Insassen wie auch von Personen, welche mit dem Fahrzeug zusammenstoßen, eingesetzt. Ein Großteil der bisher eingesetzten Schutzsysteme verwenden nicht reversible Einrichtungen, wie z.B. pyroelektrische Zündkapseln zum Auslösen und Aufblasen von Airbags, welche nach einmaligem Auslösen ausgetauscht werden müssen, da sie nicht weiterverwendbar sind. Aufgrund der dadurch für den Halter des Fahrzeuges entstehenden hohen Kosten ist man bestrebt, zumindestens einige der Schutzsysteme durch reversible Schutzsysteme zu ersetzen. Dazu werden u.a. Elektromagnete verwendet, welche einen Splint oder eine sonstige Arretierung festhalten und bei einem Unfall eingeschaltet werden, so dass der Splint oder die Arretierung der Einrichtung gelöst werden und mechanische Energie, welche z.B. in Form einer gespannten Feder gespeichert wurde, freigesetzt wird, um Schutzvorrichtungen in eine gewünschte Position zu schieben. Entsprechende Schutzeinrichtungen können z.B. eine Kopfstütze oder eine Rückenlehne ausrichten oder einen Überrollbügel eines Cabrios ausfahren.

Für die Steuerung dieser reversiblen Schutzsysteme werden Vorrichtungen bereitgestellt, welche bei einem Unfall den notwendigen Strom zum Betreiben des Elektromagneten bereitstellen. Da eine Vielzahl von verschiedenen Elektromagneten verwendet werden, welche sich z.B. durch deren Induktivität und Maximalstrom unterscheiden, ist es wünschenswert, eine Diagnose oder Identifizierung der einzelnen angeschlossenen Schutzsysteme durchzuführen, insbesondere hinsichtlich um festzustellen, ob das Schutzsystem nach einem Unfall wieder in den Ausgangszustand zurückgesetzt wurde. Weiter ist es aus Gründen der Sicherheit notwendig die Schalteinrichtungen, Zuleitungen und Stromversorgung auf Defekte hin zu untersuchen.

Die gattungsbildenden EP 1 382 495 beschreibt ein System zum Betreiben einer reversiblen Schutzvorrichtung an einer Steuervorrichtung mit einem sehr geringen Ausgangsspannungspegel.

### VORTEILE DER ERFINDUNG

Eine der vorliegenden Erfindung zugrunde liegende Idee besteht darin, dass ein Spannungsabgriffspunkt zwischen einer Schalteinrichtung und dem Schutzsystem mit einer Spannungserfassungseinrichtung verbunden ist. Dabei ist die Schalteinrichtung und das Schutzsystem in Reihe zwischen einer Quelle (Stromquelle/Spannungsquelle) und einer Masse angeordnet.

Durch kurzzeitiges Schalten der Schalteinrichtung in einen leitenden Zustand ergibt sich an dem Spannungsabgriffspunkt ein Spannungsverhalten, welcher für das Schutzsystem eine charakteristische Amplitude und Zeitkonstante aufweist. Defekte oder nicht ordnungsgemäße Versorgungs-, Leitungs- und/oder Schaltungseinrichtungen lassen sich auf diese Weise erkennen.

In den Unteransprüchen finden sich vorteilhafte Weiterbildungen und Verbesserungen der im Patentanspruch 1 angegebenen Vorrichtung zur Ansteuerung und Diagnose von reversiblen Schutzsystemen.

Gemäß einer bevorzugten Weiterbildung ist eine Schalteinrichtung zwischen der Masse und dem Schutzsystem und eine zweite Schalteinrichtung zwischen der Quelle und dem Schutzsystem angeordnet. Eine besonders bevorzugte Weiterbildung sieht einen ersten Spannungsabgriffspunkt zwischen der ersten Schalteinrichtung und dem Schutzsystem und einen zweiten Spannungsabgriffspunkt zwischen der zweiten Schalteinrichtung und dem Schutzsystem vor. Durch die zwei Spannungsabgriffspunkte in Kombination mit den zwei getrennten Schalteinrichtungen lässt sich unterscheiden, ob eine Quelle oder das Schutzsystem defekt ist. Zudem wird dadurch die übliche Anforderung erfüllt, dass Schalteinrichtungen redundant ausgelegt sein müssen, um ein unerwünschtes Auslösen eines Schutzsystems aufgrund einer einzelnen defekten Schalteinrichtung zu verhindern. Zudem lassen sich Verdrahtungsfehler, Verkopplungen zweier Schutzsysteme, Kurzschlüsse und individuelle Fehler der einzelnen Schalteinrichtungen identifizieren. Die Schalteinrichtung kann eine Logikeinrichtung aufweisen, welche die Schalteinrichtung nur mittels eines bestimmten Protokolls leitend schaltet.

Gemäß einer Weiterbildung ist jeder Spannungsabgriffspunkt mit einer getrennten Spannungserfassungseinrichtung vorgesehen. Eine weitere Weiterbildung sieht eine zuschaltbare Spannungseinrichtung für beide Spannungsabgriffspunkte vor.

Gemäß einer weiteren Weiterbildung ist eine Prüfquelle (Prüfstrom-/spannungsquelle) mit dem zweiten Spannungsabgriffspunkt verbunden. Durch Einspeisen eines Prüfstromes kann überprüft werden, ob eine Schalteinrichtung defekt ist, und ob das richtige Schutzsystem (Kenngrößen: z. B. Induktivität) vorhanden ist.

Gemäß einer weiteren Weiterbildung ist zu jeder einzelnen Schutzeinrichtung des Schutzsystems eine Schalteinrichtung vorgesehen.

Ausführungsbeispiele der Erfindung sowie vorteilhafte Weiterbildungen sind in den Figuren der Zeichnungen schematisch dargestellt und in der nachfolgenden Beschreibung näher erläutert.

### ZEICHNUNGEN

In den Figuren zeigen:
- Fig. 1: ein Schaltbild einer ersten Ausführungsform der vorliegenden Erfindung;
- Fig. 2: ein Schaltbild einer zweiten Ausführungsform der vorliegenden Erfindung;
- Fig. 3: ein Schaltbild einer dritten Ausführungsform der vorliegenden Erfindung;
- Fig. 4: ein Schaltbild einer besonders bevorzugten vierten Ausführungsform der vorliegenden Erfindung;

### BESCHREIBUNG DER AUSFÜHRUNGSBEISPIELE

In den Figuren bezeichnen gleiche Bezugszeichen gleiche oder funktionsgleiche Komponenten, soweit nichts Gegenteiliges angegeben ist.

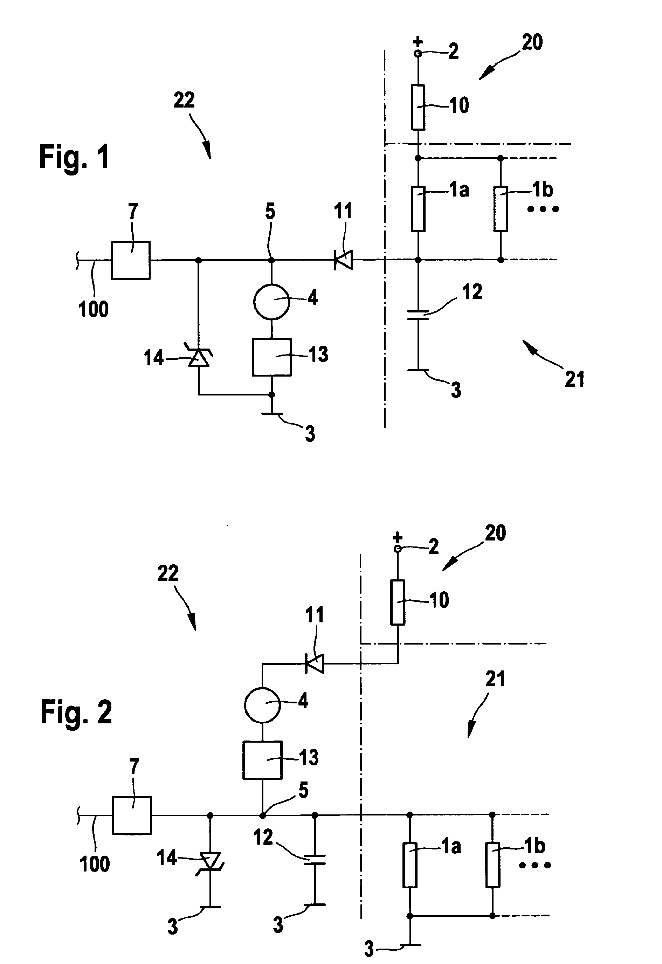

In Fig. 1 ist eine erste Ausführungsform der vorliegenden Erfindung als Schaltbild dargestellt. Das Schaltbild ist schematisch in einen Versorgungsbereich 20, einen Schutzsystembereich 21 und einen Diagnoseansteuerungsbereich 22 unterteilt. In dem Versorgungsbereich 20 wird durch eine Stromquelle 2 des Fahrzeuges eine Versorgung bereitgestellt und ein Stromfluss aus der Stromquelle 2 durch eine Sicherung 10 begrenzt. Die Stromquelle 2 ist mit einer oder mehreren Einrichtungen eines Schutzsystems 1a, 1b verbunden. Ein zweiter Kontakt der Schutzsysteme 1a, 1b ist über eine Verpolschutzdiode 11 mit einer Schaltungseinrichtung 4 verbunden. In einem leitfähigen, geschlossenen Zustand der Schalteinrichtung 4 wird ein Stromfluss durch die Schutzsysteme 1a, 1b zu einer Masse 3 ermöglicht. Zusätzlich kann eine Strombegrenzungseinrichtung 13 in Serie zu der Schalteinrichtung 4 angeordnet sein, um aktiv den Strom zu begrenzen. Somit führen defekte Schutzsysteme nicht in jedem Fall zu einem Schmelzen der Sicherung 10.

Ein Spannungsabgriff 5 zwischen der Schaltungseinrichtung 4 und den Schutzsystemen 1a, 1b ist mit einer Spannungserfassungseinrichtung 7 verbunden. Diese Spannungserfassungseinrichtung 7 kann einen Spannungsteiler sowie einen Analog/Digital-Wandler aufweisen und ein entsprechendes Prüfsignal 100 an eine Prozessoreinrichtung (nicht dargestellt) übermitteln. Die Spannung, welche an dem Spannungsabgriff 5 anliegt, ist abhängig von den Schutzsystemen 1a, 1b, sowie dem ordnungsgemäßein Zustand der Stromquelle 2 und dem Schaltzustand der Schalteinrichtung 4.

Die Schutzsysteme 1a, 1b weisen eine Spule mit einer charakteristischen Induktivität und einem charakteristischen Widerstand auf. Beim Auslösen der Schutzsysteme 1a, 1b ergibt sich somit eine charakteristische Spannung an dem Spannungsabgriff 5. Durch Aufzeichnen der Spannung an dem Spannungsabgriffspunkt 5 während eines Unfalls kann diese Spannung von einem Aufzeichnungsgerät aufgezeichnet werden, um bei einem späteren Gutachten nachweisen zu können, dass die Vorrichtung zur Ansteuerung bzw. die Schutzsysteme funktionstüchtig eingerichtet waren und auslösten.

Ein weiterer Vorteil ist, dass mit dieser Vorrichtung überprüft werden kann, ob das Schutzsystem richtig eingerichtet ist. Die Schutzsysteme 1a, 1b bestehen typischerweise aus einem Elektromagnet, welcher eine Arretierung löst, wenn durch die Spule des Elektromagneten ein Strom für eine Mindestdauer von typischerweise 15 ms fließt. Für eine Überprüfung der Ansteuerungsvorrichtung und des Schutzsystems 1a, 1b wird die Schalteinrichtung 4 kurzzeitig leitend geschaltet. Dabei bedeutet kurzzeitig kürzer als die Mindestdauer von typischerweise 15 ms. Dadurch wird das Schutzsystem 1a, 1b nicht ausgelöst, jedoch ergibt sich bereits ein für das Schutzsystem 1a, 1b typischer Spannungsverlauf an dem Spannungsabgriffspunkt 5.

Da die Schutzsysteme 1a, 1b eine hohe Induktivität aufweisen, ist es notwendig, eine Schutzdiode 14, z.B. eine Zener-Diode, parallel zu der Schalteinrichtung 4 anzuordnen, um die Schalteinrichtung 4, welche z.B. einen Feldeffekttransistor aufweist, vor diesen Spannungsspitzen zu schützen und den Spannungsverlauf bei Überprüfungen (Diagnose) und Auslösungen zu begrenzen

In Fig. 2 ist eine zweite Ausführungsform als Schaltbild dargestellt. Im Gegensatz zu der ersten Ausführungsform sind die Schutzsysteme 1a, 1b masseseitig zu der Schaltungseinrichtung 4 angeordnet. Die Spannungserfassungseinrichtung 7 erfasst wiederum den Spannungsabfall an dem Spannungsabgriffspunkt 5 zwischen der Schaltungseinrichtung 4 und den Schutzsystemen 1a, 1b. Hierbei ist jedoch zu beachten, dass bei einem Ausschalten der Schalteinrichtung 4, also in den nicht leitfähigen Zustand, das Potenzial in dem Spannungsabgriffspunkt 5 gegenüber dem Massepotenzial 3 negativ wird. Die Spannungserfassungseinrichtung 7 ist entsprechend auszulegen.

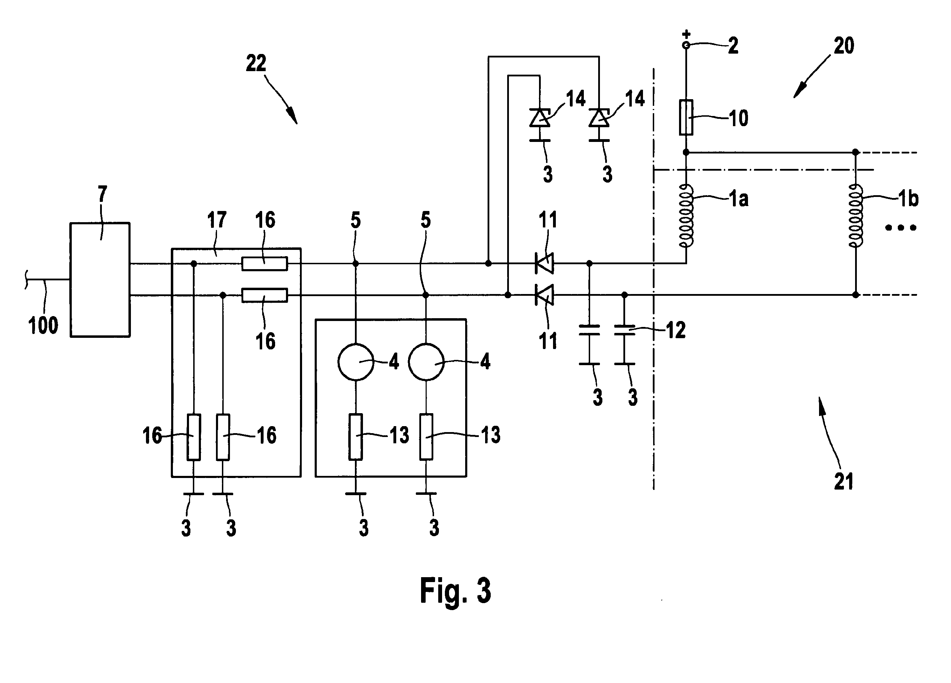

In Fig. 3 ist eine dritte Ausführungsform der vorliegenden Erfindung dargestellt, welche sich von der ersten Ausführungsform der vorliegenden Erfindung darin unterscheidet, dass jede einzelne Schutzeinrichtung des Schutzsystems 1a, 1b über eine getrennte Schalteinrichtung 4 verfügt und somit einzeln ausgelöst und überprüft werden kann. Entsprechend ist auch jeder Einrichtung des Schutzsystems 1a, 1b ein eigener Spannungsabgriffspunkt 5 zugeordnet. Die Spannungserfassungseinrichtung 7 kann in zweierlei Weise ausgebildet sein. Entweder sie weist mehrere parallel angeordnete Spannungswandlereinrichtungen, wie z.B. Analog/Digital-Wandler auf, oder eine Eingangsstufe, welche die einzelnen Spannungsabgriffspunkte mit einem einzigen Spannungswandler schaltbar verbindet. Der Vorteil der dritten Ausführungsform ist, dass sie eine individuelle Analyse der einzelnen Schutzsysteme ermöglicht.

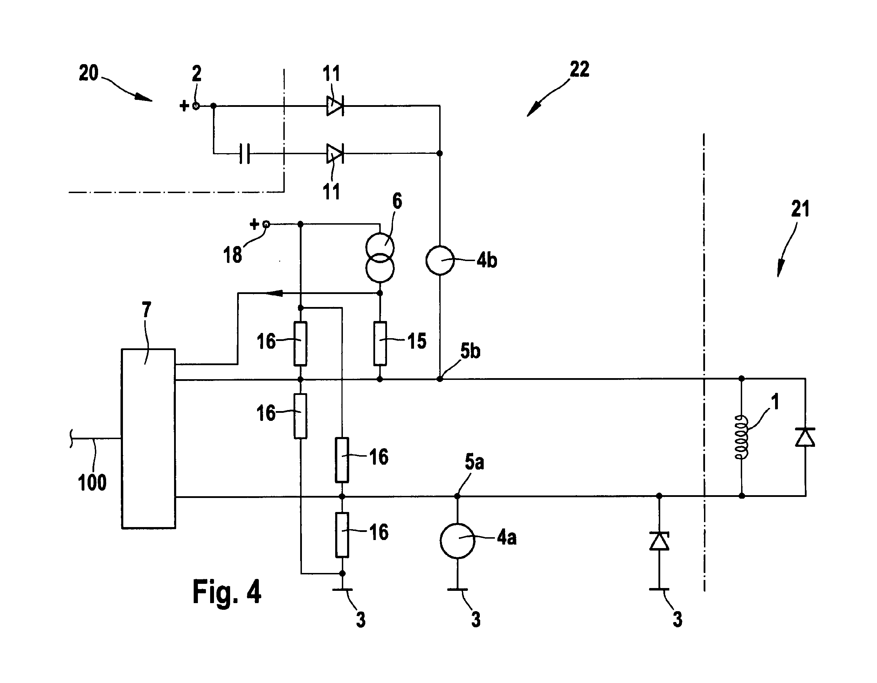

Fig. 4 zeigt eine besonders bevorzugte vierte Ausführungsform der vorliegenden Erfindung als Schaltplan. Die wesentliche Änderung gegenüber den vorhergehenden Ausführungsformen ist, dass zwei Schalteinrichtungen 4a, 4b verwendet werden, wobei eine erste Schalteinrichtung 4a zwischen dem Schutzsystem 1 und der Masse 3 und die zweite Schalteinrichtung 4b zwischen der Schutzeinrichtung 1 und der Stromquelle 2 angeordnet ist. Ein erster Vorteil dieser Vorrichtung ist, dass bei einem fehlerhaften Schließen einer der beiden Schalteinrichtungen 4a, 4b, also Schalten in den leitenden Zustand, noch keine Auslösung des Schutzsystems 1 erfolgt. In vielfältigen Schutzsystemen und entsprechenden Ansteuerungsvorrichtungen wird eine entsprechende Redundanz der Schalteinrichtung gefordert, um ein fehlerhaftes Auslösen der Schutzsysteme zu verhindern, welche sonst selbst Ursache eines Unfalls werden kann, da durch das Auslösen der Fahrer eines Fahrzeuges irritiert wird. Ein zweiter Vorteil dieser Anordnung ist, dass beim Auftreten einer Fehlerfunktion der Anordnung überprüft werden kann, ob die Ursache für die Fehlerfunktion die Stromquelle, ein Schaltelement oder Kabelbaumfehler (Unterbrechungen, Kurzschlüsse, Verkopplungen zweier Schutzsysteme) oder das Schutzsystem 1 ist. Hierzu sind entsprechend die Schaltelemente 4a, 4b einzeln zu schalten und die Spannungen an den Spannungsabgriffspunkten 5a, 5b zu erfassen. Die Spannungsabgriffspunkte 5a, 5b sind zwischen den entsprechenden Schalteinrichtungen 4a, 4b und dem Schutzsystem 1 angeordnet. Die Spannungserfassungseinrichtung 7 erfasst wie in den vorhergehenden Ausführungsbeispielen die Spannungen an den Spannungsabgriffspunkten 5a, 5b und generiert ein Prüfsignal 100, welches an eine Prozessoreinrichtung weitergeleitet wird.

An dem zweiten Spannungsabgriffspunkt 5b kann ein Prüfstrom einer Prüfstromquelle 6 eingespeist werden. Der Prüfstrom kann so gering gewählt sein, dass er nicht das Schutzsystem 1 auslöst. Somit kann eine Zeitkonstante der Spule des Schutzsystems 1 ausgemessen werden, auch wenn diese Anstiegszeit größer als 15 ms oder größer der Stromdauer für die Auslösung ist. Hierzu wird die erste Schalteinrichtung 4a leitend geschaltet. Die Prüfstromquelle 6 kann durch eine zweite Stromquelle 18 oder die Stromquelle 2 des Fahrzeugs gespeist werden.

Weiter sind in der Fig. 4 Widerstände 16 angeordnet, welche einen Spannungsteiler vor der Spannungserfassungseinrichtung bilden, und ein weiterer Widerstand 15, welcher den Prüfstrom in eine Prüfspannung umwandelt, welcher von der Spannungserfassungseinrichtung 7 aufgezeichnet wird. Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Die Schalteinrichtungen 4a, 4b können sowohl als reine An/Aus-Schalter, z.B. durch Feldeffekttransistoren, ausgebildet sein, als auch als variierbare Strombegrenzungseinrichtungen.

## Patentansprüche

1. Vorrichtung zur Ansteuerung und Diagnose von reversiblen Schutzsystemen (1a, 1b; 1), das zwischen einer Quelle (2) und einer Masse (3) angeordnet ist, wobei eine erste Schalteinrichtung (4a) zwischen der Masse (3) und dem reversiblen Schutzsystem (1a, 1b; 1) und eine zweite Schalteinrichtung (4b) zwischen der Quelle (2) und dem reversiblen Schutzsystem (1a, 1b; 1) angeordnet ist,
**dadurch gekennzeichnet,**
**dass** ein erster Spannungsabgriffpunkt (5a) zwischen der ersten Schalteinrichtung (4a) und dem reversiblen Schutzsystem (1a, 1b; 1) und ein zweiter Spannungsabgriffpunkt (5b) zwischen der zweiten Schalteinrichtung (4b) und dem reversiblen Schutzsystem (1a, 1b; 1) angeordnet ist und der erste Spannungsabgriffpunkt (5a) und der zweite Spannungsabgriffpunkt (5b) mit einer Spannungserfassungseinrichtung (7) verbunden sind.

2. Vorrichtung nach Anspruch 1 **dadurch gekennzeichnet, dass** zu jedem Spannungsabgriffpunkt (5; 5a, 5b) eine getrennte Spannungserfassungseinrichtung (7) vorgesehen ist.

3. Vorrichtung nach Anspruch 1 **dadurch gekennzeichnet, dass** eine zuschaltbare Spannungserfassungseinrichtung (7) für beide Spannungsabgriffpunkte (5a, 5b) vorgesehen ist.

4. Vorrichtung nach mindestens einem der Ansprüche 1 bis 3 **dadurch gekennzeichnet, dass** eine Prüfquelle (6) mit dem zweiten Spannungsabgriffpunkt (5b) verbunden ist.

5. Vorrichtung nach mindestens einem der vorhergehenden Ansprüche **dadurch gekennzeichnet, dass** zu jeder einzelnen Schutzeinrichtung des reversiblen Schutzsystems eine Schalteinrichtung (4; 4a, 4b) vorgesehen ist.

## Claims

1. Device for actuating and diagnosing reversible protection systems (1a, 1b; and 1), which is arranged between a source (2) and earth (3), wherein a first switching device (4a) is arranged between the earth (3) and the reversible protection system (1a, 1b; 1) and a second switching device (4b) is arranged between the source (2) and the reversible protection system (1a, 1b; 1),
**characterized in that** a first voltage tap point (5a) is arranged between the first switching device (4a) and the reversible protection system (1a, 1b; 1), and a second voltage tap point (5b) is arranged between the second switching device (4b) and the reversible protection system (1a, 1b; 1), and the first voltage tap point (5a) and the second voltage tap point (5b) are connected to a voltage-detection device (7).

2. Device according to Claim 1, **characterized in that** a separate voltage-detection device (7) is provided at each voltage tap point (5; 5a, 5b).

3. Device according to Claim 1, **characterized in that** a connectable voltage-detection device (7) is provided for both voltage tap points (5a, 5b).

4. Device according to at least one of Claims 1 to 3, **characterized in that** a test source (6) is connected to the second voltage tap point (5b).

5. Device according to at least one of the preceding claims, **characterized in that** a switching device (4; 4a, 4b) is provided for each individual protection device of the reversible protection system.

## Revendications

1. Dispositif de commande et de diagnostic de systèmes de protection réversibles (1a, 1b ; 1), ledit dispositif étant disposé entre une source (2) et une masse (3), un premier dispositif de commutation (4a) étant disposé entre la masse (3) et le système de protection réversible (1a, 1b ; 1) et un deuxième dispositif de commutation (4b) étant disposé entre la source (2) et le système de protection réversible (1a, 1b ; 1), **caractérisé en ce qu'**un premier point de prise de tension (5a) est disposé entre le premier dispositif de commutation (4a) et le système de protection réversible (1a, 1b ; 1) et qu'un deuxième point de prise de tension (5b) est disposé entre le deuxième dispositif de commutation (4b) et le système de protection réversible (1a, 1b ; 1) et que le premier point de prise de tension (5a) et le deuxième point de prise de tension (5b) sont reliés à un dispositif d'enregistrement de tension (7).

2. Dispositif selon la revendication 1, **caractérisé en ce qu'**un dispositif d'enregistrement de tension (7) séparé est prévu à chaque point de prise de tension (5 ; 5a, 5b).

3. Dispositif selon la revendication 1, **caractérisé en ce qu'**un dispositif d'enregistrement de tension (7) connectable est prévu pour les deux points de prise de tension (5a, 5b).

4. Dispositif selon au moins l'une quelconque des revendications 1 à 3, **caractérisé en ce qu'**une source de contrôle (6) est reliée au deuxième point de prise de tension (5b).

5. Dispositif selon au moins l'une quelconque des revendications précédentes, **caractérisé en ce qu'**un dispositif de commutation (4 ; 4a, 4b) est prévu à chaque dispositif de protection individuel du système de protection réversible.
